# Europäisches Patentamt

# European Patent Office

# Office européen des brevets

(11) Veröffentlichungsnummer: **0 076 976**
**A1**

(12) # EUROPÄISCHE PATENTANMELDUNG

(21) Anmeldenummer: **82109044.6**

(22) Anmeldetag: **30.09.82**

(51) Int. Cl.³: **C 02 F 3/06**

(30) Priorität: **10.10.81 DE 3140263**

(43) Veröffentlichungstag der Anmeldung: **20.04.83**
**Patentblatt 83/16**

(84) Benannte Vertragsstaaten: **AT BE CH DE FR GB IT LI LU NL SE**

(71) Anmelder: **Stähler, Theo, Mühlenhof,**
**D-6253 Hadamar-Niederzeuzheim (DE)**

(72) Erfinder: **Randolph, Volker, Wilhelm-Busch-Weg 21,**
**D-3320 Salzgitter 51 (DE)**
Erfinder: **Scheiblnger, Ludwig, Alfonsstrasse 7,**
**D-8000 München 19 (DE)**
Erfinder: **Stähler, Theo, Mühlenhof,**
**D-6253 Hadamar-Niederzeuzheim (DE)**

(74) Vertreter: **Kosel, Peter, Dipl.-Ing. et al, Patentanwälte**
**Dipl.-Ing. Horst Röse Dipl.-Ing. Peter Kosel**
**Postfach 129 Odastrasse 4a, D-3353 Bad Gandersheim**
**(DE)**

(54) **Klärvorrichtung mit wenigstens einem umlaufenden Tauchkörper.**

(57) Bei einer aeroben, mechanisch-biologischen Vorrichtung für die Reinigung von Medien wie Abwässern oder Frisch- und Fäkalschlämmen, mit wenigstens einem teilweise in das Medium in einem Trog (1) eintauchenden, um eine Längsachse (2) umlaufenden Tauchkörper (3; 19) ist jeder Tauchkörper mittels stirnseitiger Tragvorrichtung (20, 21) an dem Trog (1) lösbar abgestützt. Jede Tragvorrichtung (20; 21) kann mittels einer Tragplatte (22; 23) auf einer Stützfläche (17, 18; 12, 13) des Trogs (1) abgehängt sein. Wenigstens eine der Stützflächen (12, 13) kann auf einer Traverse (9) des Trogs (1) bestehen. Jede Tragvorrichtung (20; 21) kann im wesentlichen als Dreieck ausgebildet sein und an ihrer einen Ecke eine Halterung für eine Achse (45) oder Welle (57) des Tauchkörpers (3; 19) aufweisen. Ein Antrieb (29) für den Tauchkörper (3; 19) kann an einer (20) der Tragvorrichtungen relativ dazu einstellbar angeordnet sein. Ein Kettenradritzel (30) des Antriebs (29) kann im Eingriff mit einer Kette (31) stehen, die am Umfang eines mit der Längsachse (2) des Tauchkörpers (3; 19) konzentrisch an einer Stirnseite des Tauchkörpers (3; 19) befestigten kreisförmigen Kettenträger (32) festgelegt ist.

**DIPL.-ING. HORST RÖSE**   **DIPL.-ING. PETER KOSEL**

**PATENTANWÄLTE**

0076976

Unsere Akten-Nr.: 1774/862EP  Bad Gandersheim, 29. September 1982

01 Theo STÄHLER

### Klärvorrichtung mit wenigstens einem umlaufenden Tauchkörper

Die Erfindung betrifft eine Vorrichtung für die aerobe biologische Reinigung von Medien wie Abwässern oder Frisch- und Fäkalschlämmen gemäß dem Oberbegriff des Anspruchs 1.

Bei einer bekannten Vorrichtung dieser Art (AT-Patentschrift 295 423) ist jede Tragvorrichtung V-förmig ausgebildet und mit ihren freien Enden lose auf einer Traverse des Trogs abgehängt. Für z.B. durch Lufteinschluß aufschwimmende, nach dem kombinierten Belebungsverfahren arbeitende Tauchkörper ist dieses einfache Abhängen ungeeignet. Im mittleren Bereich jeder Tragvorrichtung sind an Traversen in senkrechtem Abstand voneinander Rollen zur Umlenkung eines biegsamen Bandes gelagert, das Bewuchsplattenpakete des als Elevator ausgebildeten Tauchkörpers trägt. Der Antrieb für den Elevator ist gesondert auf einer der Trogtraversen montiert.

Aus der DE-Offenlegungsschrift 28 27 996 ist es an sich bekannt, einen walzenartigen, um eine Längsachse umlaufenden Tauchkörper an jedem Ende mit einem Ring auf zwei in seitlichem Abstand voneinander an einer Stirnwand des Trogs angeordneten Spurkranzrollen zu lagern. Ein Antriebsring des Tauchkörpers weist achsparallele Stehbolzen auf, mit denen ein Ritzel eines an einer Stirnwand des Trogs angeflanschten Getriebemotors kämmt. Montage und Demontage des Tauchkörpers sowie die gegenseitige Zentrierung von Antriebsring und Ritzel sind verhältnismäßig schwierig.

0076976

Aus der GB-Patentschrift 1 543 670 ist ein walzenartiger, nicht aufschwimmender Tauchkörper an sich bekannt, dessen unter den Spiegel versenkte Wellenenden jeweils auf zwei Stützrollen einer auf dem Boden des Trogs montierten Tragvorrichtung gelagert sind. Auf einer oberhalb des Spiegels innen an dem Trog befestigten Konsole ist ein Antrieb angebracht, dessen Ritzel mit einem an einer Stirnseite des Tauchkörpers vorgesehenen Zahnkranz kämmt. Diese Lagerung des Tauchkörpers ist wegen seiner freien Bewegbarkeit nach oben nicht für aufschwimmende Tauchkörper geeignet. Anordnung und Montage des Antriebs sowie seine Zentrierung relativ zu dem Zahnkranz des Tauchkörpers sind aufwendig und kompliziert.

Der Erfindung liegt die Aufgabe zugrunde, Lagerung und Antrieb des wenigstens einen Tauchkörpers in dem Trog zu verbessern und die Montage und Demontage zu vereinfachen.

Diese Aufgabe ist durch die im Kennzeichnungsteil des Anspruchs 1 angegebenen Mittel gelöst. Dank den Tragplatten lassen sich die Tragvorrichtungen sehr leicht und sicher an alle gängigen Trogtypen, insbesondere solche aus Beton oder Stahlblech, anpassen. Die Tragplatten können z.B. an den oberen Rand des Trogs und/oder an Traversen des Trogs und/oder dort vorgesehene Konsolen angeschraubt werden. Damit und durch die Halterungen der Tragvorrichtungen sind auch aufschwimmende Tauchkörper eindeutig in ihrer Betriebslage fixierbar. Nach dem Entfernen der Tragplattenschrauben läßt sich der Tauchkörper sehr leicht und schnell mit seinen Tragvorrichtungen aus dem Trog ausheben und mit ähnlichen Vorteilen auch in dem Trog montieren. Vorteilhaft ist ferner, daß die Welle oder Achse des Tauchkörpers sehr einfach z.B. waagerecht ausgerichtet oder in der Höhe eingestellt werden kann. Dazu wird ggf. die Verschraubung an der betreffenden Tragplatte gelöst und nach Korrektur mit Unterlegscheiben wieder angezogen. Die Zuordnung des Tauchkörpers und seines Antriebs ist erleichtert.

0076976

Die Ausbildung der Tragvorrichtungen gemäß Anspruch 2 ist besonders stabil, baulich einfach und sicher in der Handhabung.

Die Merkmale des Anspruchs 3 gestatten die besonders einfache unmittelbare Festlegung der Achse an den Tragvorrichtungen.

Die Lagerung gemäß Anspruch 4 schafft gute Lagerverhältnisse bei ausreichender Stabilität des Tauchkörpers.

Alternativ kann gemäß Anspruch 5 die Welle des Tauchkörpers auch unmittelbar in den Tragvorrichtungen drehbar gelagert sein.

Die Merkmale des Anspruchs 6 bringen bauliche und betriebliche Vorteile. Der Antrieb und die zugehörige Tragvorrichtung bilden eine Einheit, die auch bei Aus- bzw. Einbau des Tauchkörpers ihre gegenseitige Justierung nicht verliert. Der Antrieb kann vorzugsweise an der Tragplatte montiert sein.

Die Merkmale des Anspruchs 7 ermöglichen eine besonders einfache und sichere Einstellung des Antriebs relativ zu dem Tauchkörper.

Der Antrieb gemäß Anspruch 8 ist besonders einfach, betriebssicher und wartungsfreundlich.

Die Maßnahmen gemäß Anspruch 9 dienen dem besseren Formschluß zwischen der Kette und dem Kettenträger. Längenänderungen der Kette im Betrieb können sich so nicht über den gesamten Umfang des Kettenträgers summieren. So ist ein besseres Zusammenwirken zwischen Kettenradritzel und Kette gewährleistet.

0076976

Die Erfindung wird nachstehend anhand der in den Zeichnungen dargestellten Ausführungsbeispiele näher erläutert. Es zeigen:

Fig. 1 eine teilweise Stirnansicht eines Tauchkörpers in einem teilweise geschnittenen Trog,

Fig. 2 die Schnittansicht nach Linie 2-2 in Fig. 1,

Fig. 3 die Draufsicht auf die Vorrichtung gemäß Fig. 2,

Fig. 4 eine Draufsicht auf eine Tragvorrichtung für den Tauchkörper,

Fig. 5 die Seitenansicht gemäß Linie 5-5 in Fig. 4,

Fig. 6 die Draufsicht auf die Tragvorrichtung gemäß Fig. 4,

Fig. 7 eine der Fig. 6 entsprechende Draufsicht auf eine abgewandelte Tragvorrichtung, die zusätzlich einen Antrieb einstellbar aufnimmt,

Fig. 8 den oberen Teil der Seitenansicht gemäß Linie 8-8 in Fig. 7,

Fig. 9 eine Achse und teilweise längsgeschnittene Nabe für einen Tauchkörper,

Fig. 10 eine andere Ausführungsform der Lagerung, mit unmittelbar in einer Tragvorrichtung gelagerter Welle des Tauchkörpers und

Fig. 11 die Schnittansicht nach Linie 11-11 in Fig. 1 in vergrößerter Darstellung.

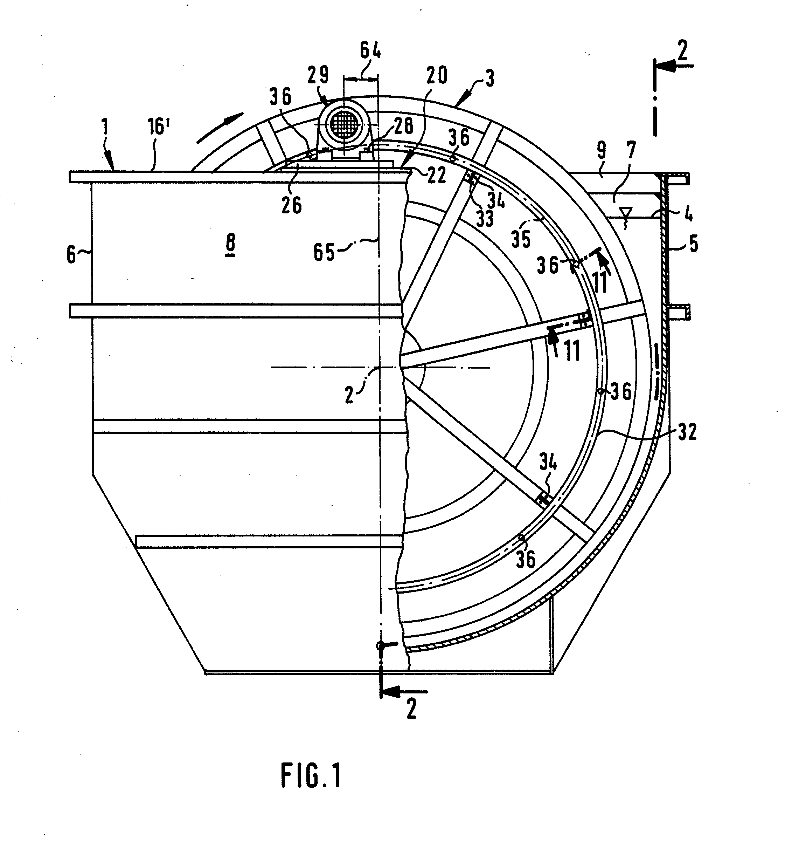

In Fig. 1 ist in einem Trog 1 aus Stahlblech ein um eine waagerechte Längsachse 2 umlaufender walzenartiger Tauchkörper 3 gezeigt, der bis zu einem Spiegel·4 in ein zu reinigendes Medium, z.B. Abwasser oder Frisch- und Fäkalschlamm, eingetaucht ist. Der Trog 1 besteht im wesentlichen aus gegenüberliegenden Seitenwänden 5 und 6 sowie damit flüssigkeitsdicht verbundenen Stirnwänden 7 und 8. Die unteren Teile der Seitenwände 5,6 sind jeweils koaxial mit der Längsachse 2 und im Abstand von dem Tauchkörper 3 gerundet.

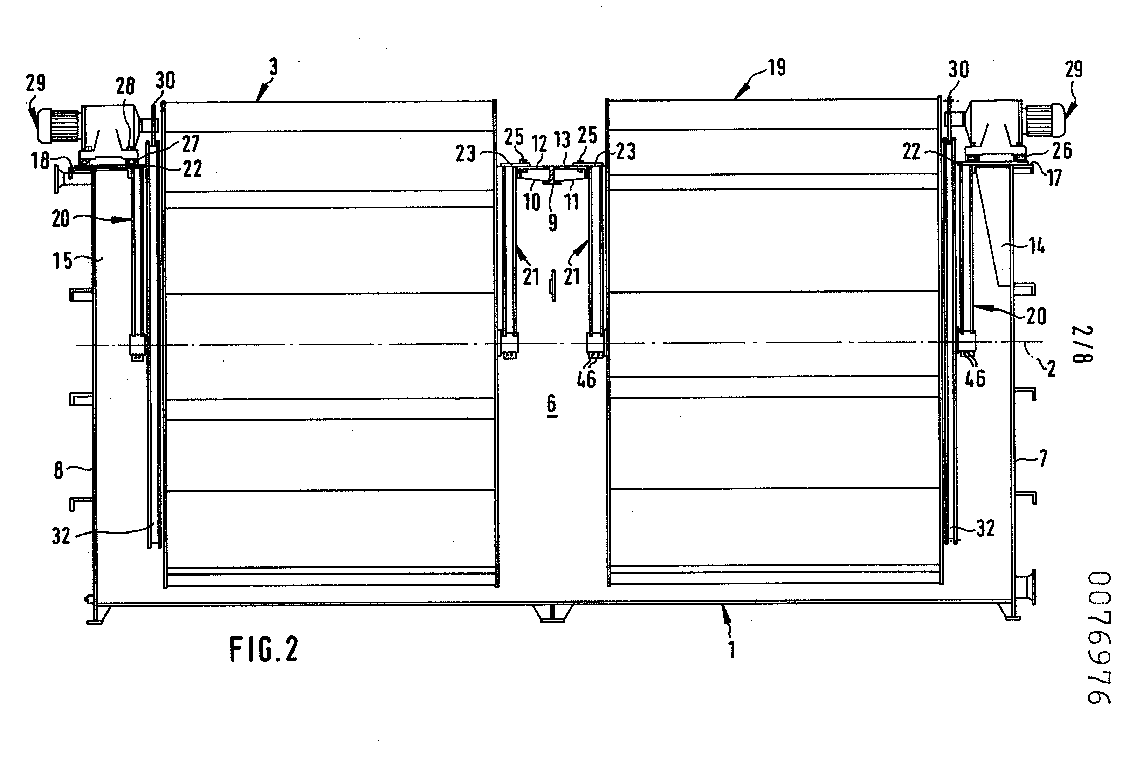

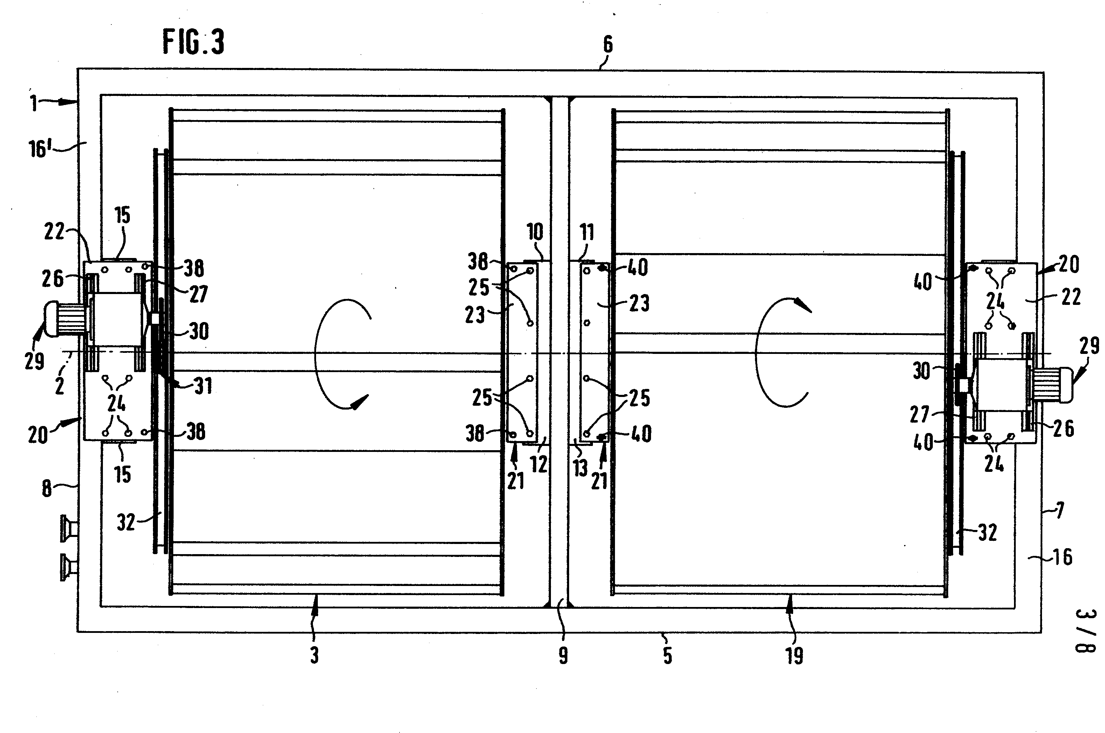

In der Längsmitte (Fig. 2 und 3) weist der Trog 1 eine Traverse 9 auf, die oben zwischen den Seitenwänden 5,6 eingeschweißt ist. In ihrer Mitte trägt die Traverse auf jeder Seite eine Konsole 10 und 11, die an ihrer Oberseite jeweils eine Stützfläche 12 und 13 definieren.

In ähnlicher Weise ist gemäß den Fig. 2 und 3 an die Stirnwände 7,8 des Trogs 1 innen und oben in der Mitte jeweils eine Konsole 14 und 15 angeschweißt. Die Konsolen 14,15 definieren oben zusammen mit einem oberen Rand 16,16' der Stirnwände 7,8 jeweils eine Stützfläche 17 und 18.

Gemäß den Fig. 2 und 3 ist in dem Trog 1 axial fluchtend mit dem Tauchkörper 3· ein weiterer gleicher Tauchkörper 19 angeordnet und in entgegengesetzter Drehrichtung antreibbar. Der Trog 1 könnte auch nur einen Tauchkörper 3 oder 19 enthalten und dazu derart verkürzt ausgebildet sein, daß seine Stirnwand 7 an die Stelle der Traverse 9 treten und dann die Konsole 10 mit der Stützfläche 12 tragen würde. Andererseits könnte der Trog 1 auch mehr als die beiden Tauchkörper 3,19 aufnehmen. Der Trog 1 könnte dazu z.B. in Fig. 3 nach rechts verlängert werden.

0076976

An die Stelle der Stirnwand 7 mit ihrem oberen Rand 16 würde dann eine der Traverse 9 entsprechende zusätzliche Traverse treten, die auf ihrer linken Seite die Konsole 14 und auf ihrer rechten Seite eine der Konsole 11 entsprechende Konsole tragen würde. In gleicher Weise könnten je nach gewünschter Klärkapazität der gesamten Vorrichtung noch weitere Traversen entsprechend der Traverse 9 mit zusätzlichen Tauchkörpern in einem entsprechend verlängerten Trog 1 untergebracht werden.

Gemäß den Fig. 1 bis 3 ist jeder Tauchkörper 3,19 mittels stirnseitiger Tragvorrichtungen 20 und 21 an dem Trog lösbar abgestützt. Jede Tragvorrichtung 20,21 ist mittels einer Tragplatte 22 oder 23 auf einer der Stützflächen 12,13,17,18 des Trogs 1 abgehängt und dort mit Schrauben 24 oder 25 lösbar befestigt.

Jede Tragplatte 22 ist an ihrer Oberseite mit zwei quer zu der Längsachse 2 des Tauchkörpers 3,19 verlaufenden Schienen 26 und 27 versehen. In den Schienen 26,27 sind jeweils Befestigungsschrauben 28 (Fig. 1) eines durch einen Getriebemotor gebildeten Antriebs 29 für den Tauchkörper 3,19 verankert. Der Antrieb 29 ist also jeweils längs den Schienen 26,27 verschiebbar und damit relativ zu dem zugehörigen Tauchkörper 3,19 einstellbar.

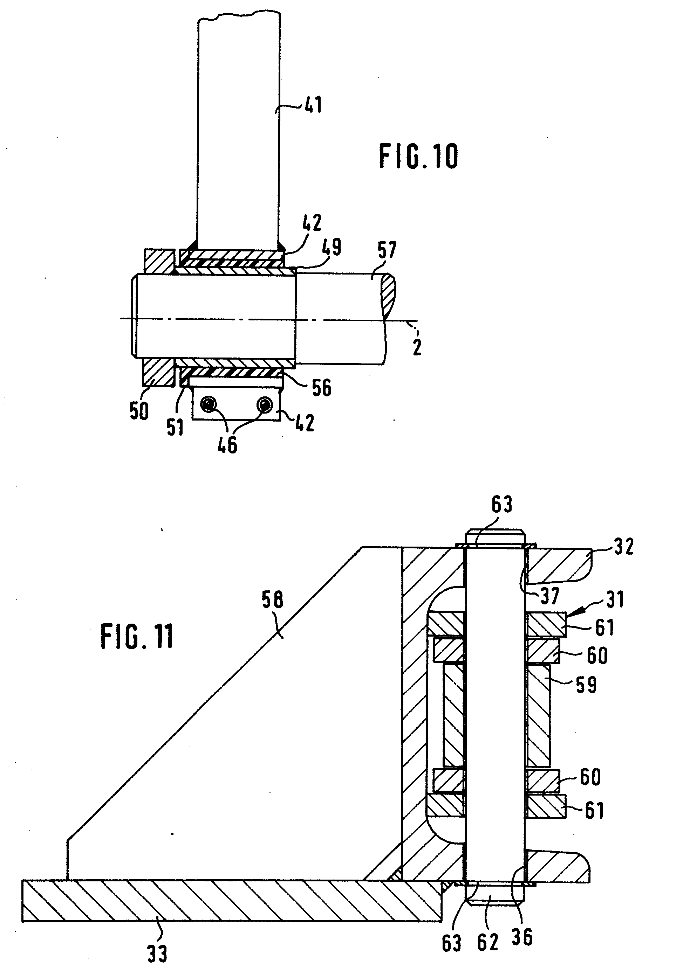

Eine Abtriebswelle des Antriebs 29 trägt ein Kettenradritzel 30, das in eine in Fig. 3 angedeutete Kette 31 eingreift. Einzelheiten der Kette 31 zeigt Fig. 11. Die Kette 31 kann z.B. eine Einfach-Rollenkette 1 1/2x1 Zoll gemäß DIN 8187 sein. Die Kette 31 ist in einen nach außen offenen kreisförmigen Kettenträger 32 auf den gesamten Umfang eingelegt. Der Kettenträger 32 ist konzentrisch mit der Längsachse 2 des Tauchkörpers 3,19 an einer Stirnseite des Tauchkörpers 3,19 mittels Montagestücken 33 und Schrauben 34 befestigt. Fig. 1 zeigt strichpunktiert einen Teilkreis 35, auf dem die Längsachse sämtlicher Bolzen der Kette 31 angeordnet ist.

Der Kettenträger 32 ist von U-förmiger Querschnittsfläche und weist in seinen Schenkeln gleichmäßig über den Umfang verteilt miteinander fluchtende Paare von Bohrungen 36 und 37 (Fig. 1 und 11) auf. Der Zweck dieser Bohrungen 36,37 wird im Zusammenhang mit Fig. 11 beschrieben werden.

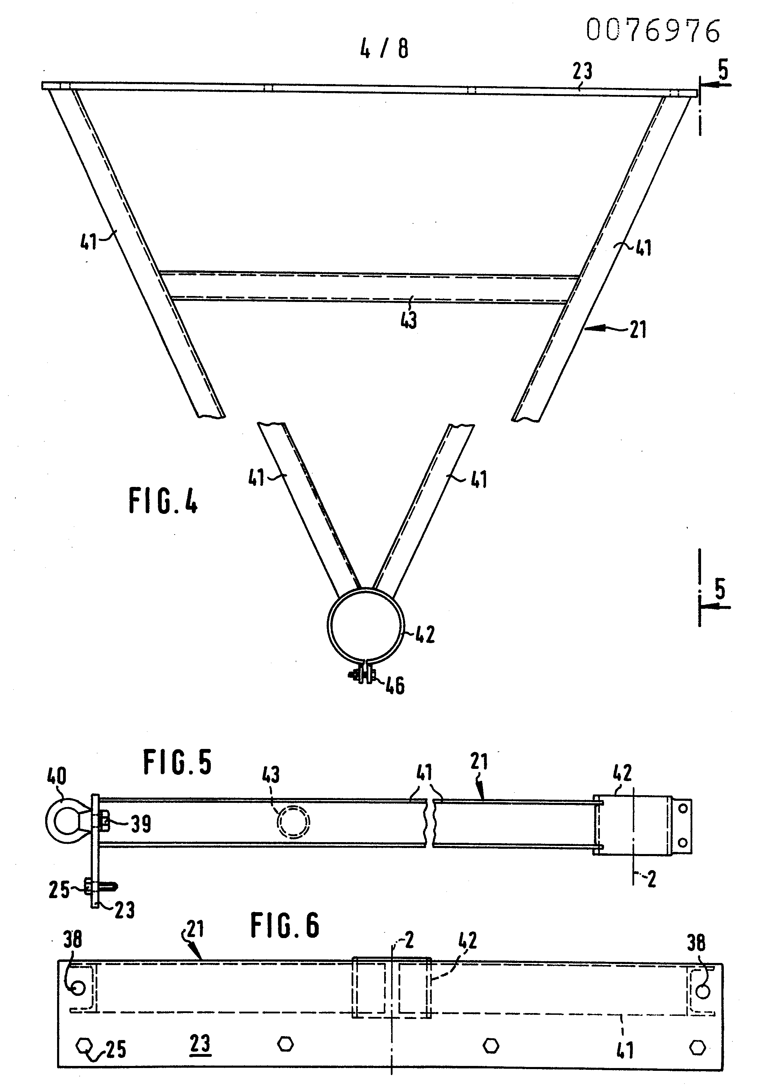

Die Tragplatten 22,23 sind an ihrer dem zugehörigen Tauchkörper 3,19 zugewandten Seite jeweils mit zwei Montagebohrungen 38 (Fig. 3) versehen. Zum Einbau und Ausbau der Tauchkörper 3,19 in den bzw. aus dem Trog 1 werden von unten her Schrauben 39 (Fig. 5) durch die Montagebohrungen 38 hindurchgesteckt und mit Ringmuttern 40 (Fig. 3 und 5) verschraubt. An den Ringmuttern 40 können dann Seile oder Ketten eines Hebezeugs angeschlagen und, nach Lösen der Schrauben 24,25 der betreffende Tauchkörper 3,19 sehr leicht und schnell aus dem Trog 1 ausgehoben werden. Der Einbau der Tauchkörper 3,19 geschieht in umgekehrter Reihenfolge mit den gleichen Vorteilen.

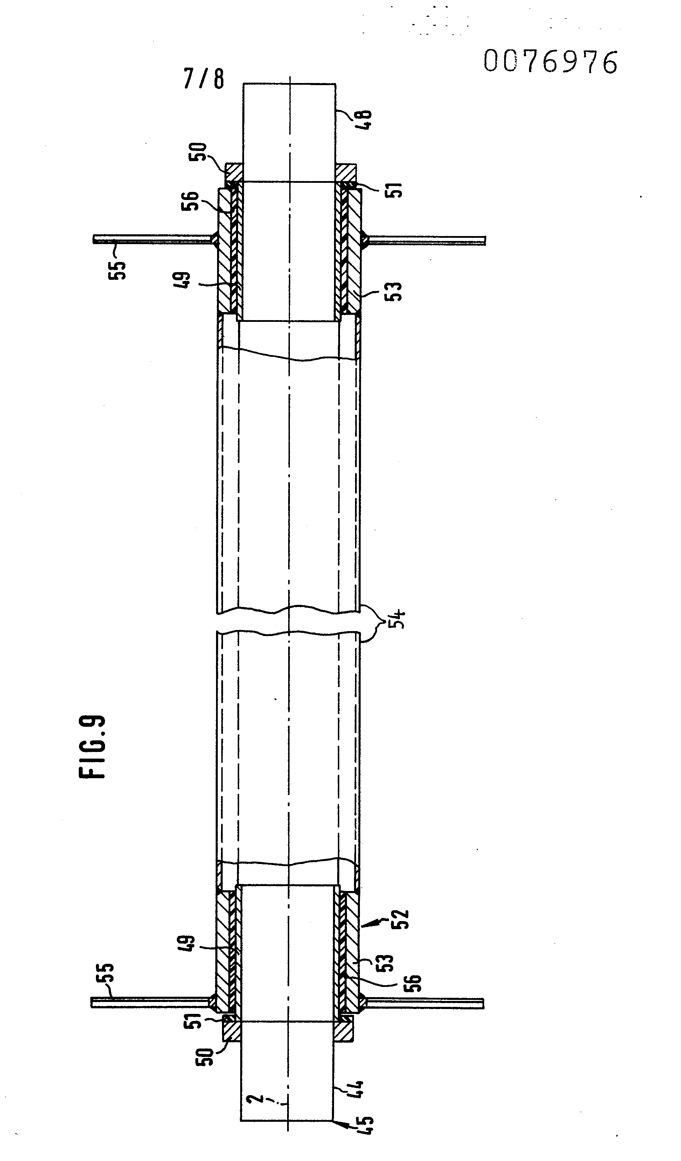

Die Fig. 4,5 und 6 zeigen Einzelheiten der insgesamt dreieckigen Tragvorrichtung 21. Mit der Unterseite der Enden der Tragplatte 23 sind, nach unten zusammenlaufend, U-Profile 41 verschweißt, deren unteres Ende jeweils an eine Klemmschelle 42 angeschweißt ist. Zur Versteifung ist im oberen Bereich der Tragvorrichtung 21 zwischen die U-Profile eine rohrförmige Traverse 43 eingeschweißt. Die Klemmschelle 42 umgreift ein freies Ende 44 (Fig. 9) einer mit der Längsachse 2 des Tauchkörpers 3,19 konzentrischen Achse 45 und läßt sich mittels zweier Schrauben 46 gegen das freie Ende 44 fest verspannen.

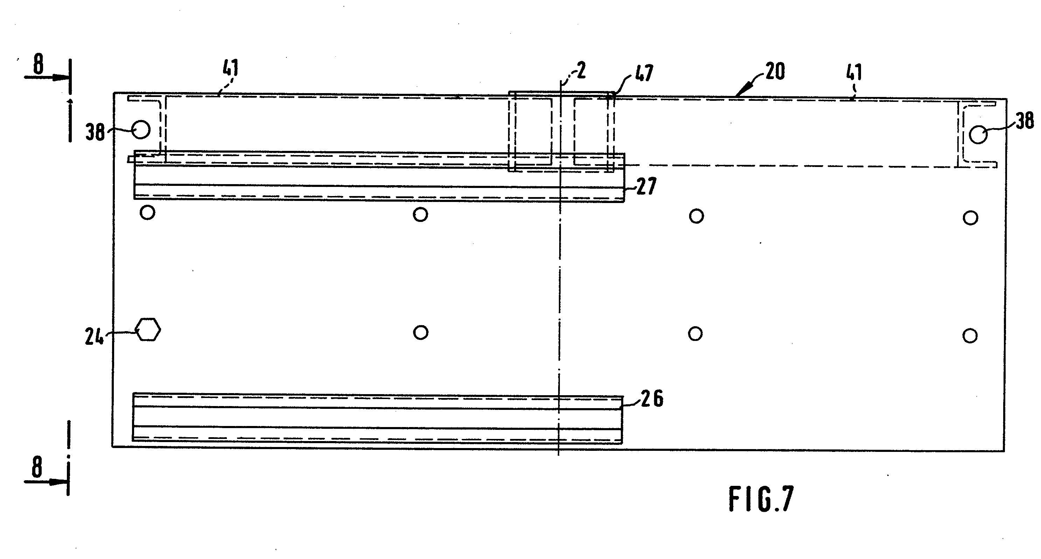

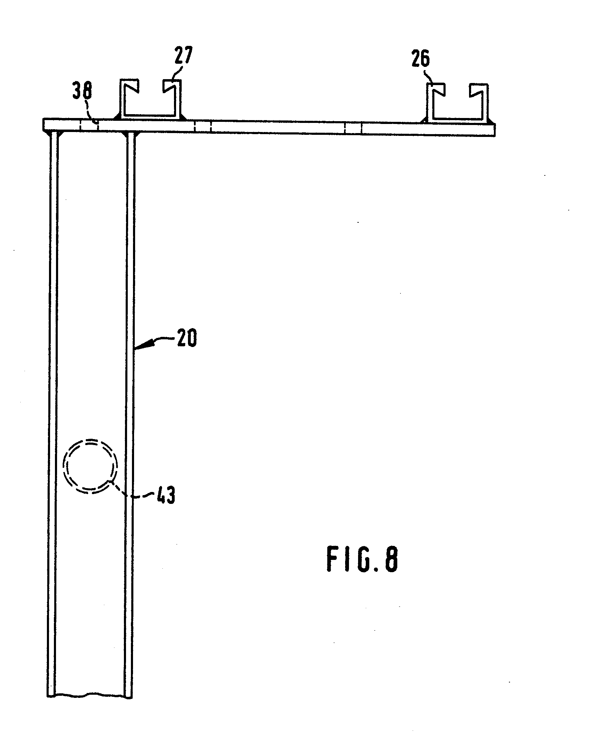

In den Fig. 7 und 8 sind Einzelheiten der Tragvorrichtung 20 dargestellt, wobei gleiche Teile wie bei der Tragvorrichtung 21 mit gleichen Bezugszahlen versehen sind. Die Tragvorrichtung 20 ist unten mit einer Klemmschelle 47 versehen, die zur Vereinfachung in Fig. 8 nicht gezeichnet, aber in der gleichen Weise wie die Klemmschelle 42 gemäß den Fig. 4 bis 6 ausgebildet ist. Die Klemmschelle 47 läßt sich mit ihren Schrauben 46 (Fig. 2) um ein anderes freies Ende 48 (Fig. 9) der Achse 45 spannen.

Gemäß Fig. 9 ist auf die freien Enden 44,48 der Achse 45 jeweils zunächst eine Lagerbuchse 49 aus einer verschleißfesten Metallegierung und anschließend mit Preßsitz ein Bundring 50 aufgeschoben.

Die Bundringe 50 tragen jeweils auf der einander zugewandten Seite einen Ring 51 aus einem Lagerwerkstoff, bei dem es sich vorzugsweise um ein polymer faserverstärktes Asbestgarn, eingebettet in eine Duroplastmatrix, handelt. Ein solcher Lagerwerkstoff wird z.B. unter der Bezeichnung Textar 557 von der Textar GmbH, Postfach 22 01 44, D-5090 Leverkusen 1, angeboten. Die Ringe 51 dienen als Axialanschläge für eine Nabe 52 des Tauchkörpers 3,19.

Die Nabe 52 ist aus Nabenringen 53 und einem dazwischen eingeschweißten Nabenrohr 54 aufgebaut. Jeder Nabenring 53 trägt außen angeschweißt einen Montageflansch 55, an dem in nicht mehr dargestellter Weise der Tauchkörper 3, 19 befestigt wird. An ihrer Innenseite sind die Nabenringe 53 jeweils mit einer Lagerbuchse 56 aus dem gleichen Lagerwerkstoff wie die Ringe 51 ausgekleidet. Die Lagerbuchsen 49,56 bilden eine bei den gegebenen zu reinigenden Medien sehr günstige Lagerpaarung von hoher Standzeit.

Fig. 10 zeigt eine andere Ausführungsform der Lagerung, bei der der Tauchkörper 3,19 in im einzelnen nicht gezeichneter Weise mit einer Welle 57 drehfest verbunden ist. Gleiche Teile sind in Fig. 10 mit gleichen Bezugszahlen wie in den voraufgegangenen Figuren bezeichnet. Im Fall der Fig. 10 ist der Ring 51 an die Lagerbuchse 56 angeformt, die durch die Klemmschelle 42 gehalten ist.

Gemäß Fig. 11 ist zwischen das Montagestück 33 und den Kettenträger 32 ein Stegblech 58 zur Versteifung eingeschweißt.

Die Kette 31 ist in der üblichen Weise aus Rollen 59 sowie Innenlaschen 60 und Außenlaschen 61 aufgebaut, die alle durch Bolzen durchdrungen sind, die normalerweise nur unwesentlich über die Außenlaschen 61 hinausragen. Fluchtend mit den Bohrungen 36,37 ist jeweils der handelsübliche Kettenbolzen durch einen Arretierbolzen 62 ersetzt, der sich zu beiden Seiten nach außen hin über die Außenlaschen 61 hinaus und durch die damit fluchtenden Bohrungen 36,37 hindurch erstreckt. Der Arretierbolzen 62 ist durch Sicherungsringe 63 festgelegt. Die Außenlaschen 61 stützen sich an einem Steg des Kettenträgers 32 ab. Zur leichteren Einstellung des Eingriffs zwischen dem Kettenradritzel 30 und der Kette 31 ist gemäß Fig. 1 der Antrieb 29 in seiner normalen Betriebsstellung mit seiner Längsachse in einem seitlichen Abstand 64 von einer durch die Längsachse 2 des Tauchkörpers 3,19 verlaufenden senkrechten Ebene 65 angeordnet.

Patentanwälte
Dipl.-Ing. Horst Röse
Dipl.-Ing. Peter Kosel

Unsere Akten-Nr.: 1774/862 EP    Bad Gandersheim, 29. September 1982
Theo STÄHLER

P A T E N T A N S P R Ü C H E

1. Vorrichtung für die aerobe biologische Reinigung von
Medien wie Abwässern oder Frisch- und Fäkalschlämmen,
mit wenigstens einem teilweise in das Medium in einem
Trog (1) eintauchenden, umlaufenden Tauchkörper (3;19),
wobei jeder Tauchkörper (3;19) mit stirnseitigen,
sich unter einen Spiegel (4) des Mediums erstreckenden
Tragvorrichtungen (20,21) auf oberhalb des Spiegels (4)
angeordneten Stützflächen (17,18;12,13) des Trogs (1)
lösbar abgehängt ist,
dadurch gekennzeichnet, daß jede Tragvorrichtung (20;21)
mit einer Tragplatte (22;23) auf der zugeordneten Stützfläche (17,18; 12,13) abgehängt ist, und daß jede Tragvorrichtung (20;21) am unteren Ende eine Halterung für
eine Achse (45) oder Welle (57) des um eine Längsachse
(2) der Achse (45) oder Welle (57) umlaufenden, walzenartigen Tauchkörpers (3;19) aufweist.

2. Vorrichtung nach Anspruch 1, dadurch gekennzeichnet,
daß jede Tragvorrichtung (20;21) im wesentlichen als
Dreieck ausgebildet ist, wobei eine Seite des Dreiecks
durch die Tragplatte (22;23) gebildet ist.

3. Vorrichtung nach Anspruch 1 oder 2, dadurch gekennzeichnet, daß die Halterung als Klemmschelle (42;47)
für die Achse (45) des Tauchkörpers (3;19) ausgebildet
ist.

0076976

4. Vorrichtung nach Anspruch 3, dadurch gekennzeichnet, daß der Tauchkörper (3;19) eine auf der Achse (45) drehbar gelagerte rohrförmige Nabe (52) aufweist.

5. Vorrichtung nach Anspruch 1 oder 2, dadurch gekennzeichnet, daß die Halterung eine Lagerbuchse (56) für die Welle (57) des Tauchkörpers (3;19) aufweist.

6. Vorrichtung nach einem der Ansprüche 1 bis 5, dadurch gekennzeichnet, daß ein Antrieb (29) für die Drehung des wenigstens einen Tauchkörpers (3;19) an einer (20) der Tragvorrichtungen relativ zu dieser Tragvorrichtung (20) einstellbar angeordnet ist.

7. Vorrichtung nach Anspruch 6, dadurch gekennzeichnet, daß der Antrieb (29) in quer zu der Längsachse (2) des Tauchkörpers (3;19) verlaufenden Schienen (26,27) der Tragvorrichtung (20) verschiebbar und festlegbar ist.

8. Vorrichtung nach Anspruch 6 oder 7, dadurch gekennzeichnet, daß ein Kettenradritzel (30) des Antriebs (29) im Eingriff mit einer Kette (31) steht, die an dem Umfang eines mit der Längsachse (2) des Tauchkörpers (3;19) konzentrisch an einer Stirnseite des Tauchkörpers (3;19) befestigten kreisförmigen Kettenträgers (32) festgelegt ist.

9. Vorrichtung nach Anspruch 8, dadurch gekennzeichnet, daß die Kette (31) an mehreren im Abstand voneinander befindlichen Stellen (vgl. 36,37,62) an dem Kettenträger (32) festgelegt ist.

Patentanwälte
Dipl.-Ing. Horst Röse
Dipl.-Ing. Peter Kosel

Theo. STÄHLER
Antrag vom 29. September 1982

0076976

FIG.1

FIG.2

0076976

**FIG.3**

FIG.4

FIG.5

FIG.6

FIG.7

FIG.8

FIG.9

0076976

FIG.10

FIG.11

## EINSCHLÄGIGE DOKUMENTE

EP 82109044.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | AT - B - 290 417 (SVENSKA) <br><br> * Seite 1, Zeilen 1-8; Seite 2, Zeilen 26-52; Fig. 2 * <br><br> ---- | 1,2,4 | C 02 F 3/06 |

RECHERCHIERTE SACHGEBIETE (Int. Cl. 3)

C 02 F

Der vorliegende Recherchenbericht wurde für alle Patentansprüche erstellt.

| Recherchenort | Abschlußdatum der Recherche | Prüfer |
|---|---|---|
| WIEN | 03-12-1982 | WILFLINGER |